Europäisches Patentamt

European Patent Office

Office européen des brevets

(11) Publication number: 0 353 620 A1

# EUROPEAN PATENT APPLICATION ·

(21) Application number: 89113805.9

(51) Int. Cl.⁴: **F16B 43/00 , F16B 39/24**

(22) Date of filing: 26.07.89

(30) Priority: 01.08.88 MX 12509

(43) Date of publication of application:
07.02.90 Bulletin 90/06

(84) Designated Contracting States:
FR IT

(71) Applicant: SPS TECHNOLOGIES, INC.
Newtown-Yardley Road
Newton Pennsylvania 18940(US)

(72) Inventor: Salazar, Rafael Ojeda
Calle 10 No. 201
Col. Granjas San Antonio D.F.,CP 09070(MX)

(74) Representative: Patentanwälte Grünecker,
Kinkeldey, Stockmair & Partner
Maximilianstrasse 58
D-8000 München 22(DE)

(54) Serrated helical spring lockwasher.

(57) A serrated helical spring lockwasher (1) consisting in a split body having two opposite bearing surfaces (2, 3) provided with serrations (4) along the full width of each one, said bearing surfaces (2, 3) having a taper permitting the washer (1) to seat only on -the inner diameter thereof, the teeth of the serrations (4) being left teeth and having a radial or slant direction.

FIG. 1

EP 0 353 620 A1

# SERRATED HELICAL SPRING LOCKWASHER

## BACKGROUND OF THE INVENTION

The present invention relates to a serrated helical spring lockwasher, and more particularly to a serrated helical spring lockwasher having serrations with left teeth showing a radial or slant direction.

There are in the prior art a lot of helical spring lockwashers including serrated helical spring lockwashers but those which lack of serrations do not perform as well as those having serrated surfaces.

Certain spring lockwashers of the prior art, having serrated surfaces, have very fine serrations, this serrations being perpendicular to the surface of the lockwasher body, and some of them have a raised rib on both sides at the inner and outer periphery of the lockwasher. These ribs groove the mating surface and the bolt head to prevent spreading of the washer ends and turning of the washer. This kind of ribs distributes the load across the width of the washer and then, when the washer is fully tightened, the serrations on the lockwasher surfaces provide additional locking power but penetrate on the mating surface and the bolt head, and when they are unlocked, the bolts usually cannot be used again because they are very marred by the serrations of the lockwasher.

It is known that the vibration-resistance of a spring lockwasher depends on the torque ratios developed by the same, and it is also very well known that the spring lock washers of the prior art have torque ratios well below the 0.85 value for a good holding power in a vibration-resistance test, such as 0.82, because of the fact that their ribs design prevents its serrations from fully contacting the mating surface of the lockwasher and the bolt head, and -because of the fact that the ribs penetrated the two surfaces deeply enough to mar the surface but not no insure -good serrations contact.

The fine serrations, on the other hand, resulted in little penetration of the mating surface and the bolt head, developing thus low torque ratios as has been above set.

As we set in the above said, all the serrated spring lockwashers the prior art, damage the mating surfaces when loosened, due to the split's sharp ends biting into the joint and head bearing surfaces, and because of this fact, the reusability of the mating surfaces is severely degraded.

## OBJECTS OF THE INVENTION

Having in mind the defects of the prior art spring lockwashers, it is an object of the present invention to provide a serrated helical spring washer which, with the modification of the serrated surfaces and the teeth temself, will be capable of producing torque ratios above the 0.82 of the prior art, resulting in a very satisfactory holding power by the vibration-resistance test.

Another object of the present invention is to provide a serrated helical spring washer having better locking ability as well as better transverse vibration-resistance, better resistance to loosening and which produces lower damage to the mating surface and the bolt head.

## SUMMARY OF THE INVENTION

The foregoing objects and others ancillary thereto are preferably accomplished as follows:

The serrations on the surface of the springlock washer of the present invention are located along the full width of each bearing surface thereof the serration laying along the full width of the washer, the bearing surface having a taper permitting the washer to seat only on the inner diameter, the hole clearance with respect to the bolt shank being large enought to cause non-symmetrical loading of the washer with respect to the bolt head; the torque ratios as a result of the serrations being above 0.85 and the lockwasher will then provide satisfactory holding power in the vibration-resistance test.

## BRIEF DESCRIPTION OF THE DRAWINGS

2

The novel features that are considered characteristic of the present invention are set forth with particularity in the appended claims. The invention itself however, both as to its organization and its method of operation, together with additional object and advantages thereof, will best be understood from the following description of specific embodiments, when read in connection with the accompanying drawings, in which:

Figure 1 is a perspective view of the serrated helical spring washer of the invention;

Figure 2 is an upper plant view showing the serrations and the tapering edges of the bearing surfaces of the serrated, helical spring washer;

Figure 3 is a cross sectional view of the helical spring washer of the invention.

## DETAILED DESCRIPTION

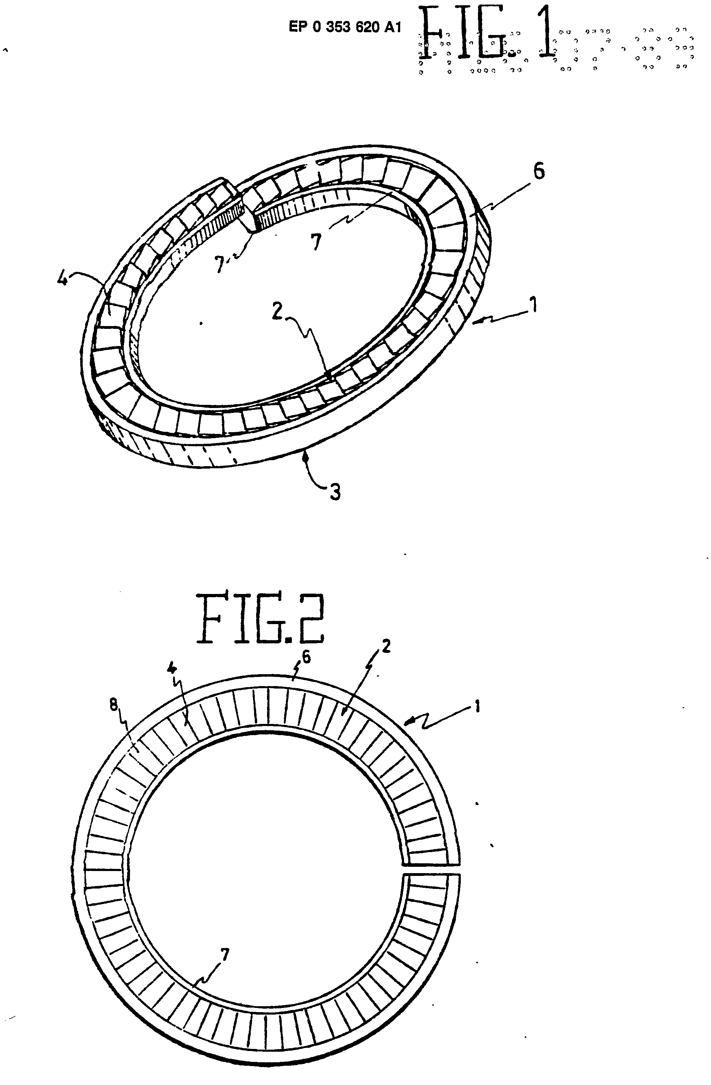

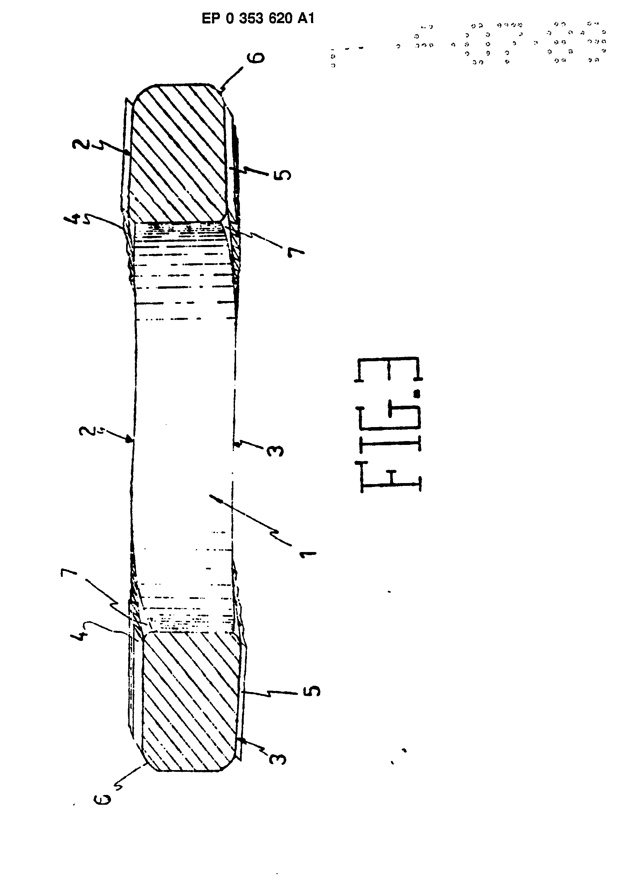

Having now more particular reference to the drawings, and more especificaly to figures 1 and 2 thereof, there is shown a serrated helical spring lockwasher comprising a body 1 having two opposite bearing surfaces 2, 3, provided with serrations 4, 5, respectively, along the full width and length of each one of the bearing surfaces, said bearing surfaces 2, 3 being provided with a taper, this taper being more pronunciated in the inner and outer edges 6, 7, respectively, of the serrated helical spring lockwasher body.

The serrations 4, 5, located on the respective bearing surfaces 2, 3, comprise a plurality of teeth having a left radial or slant direction.

## COMPARATIVE TESTS OF THE SERRATED SPRING LOCKWASHER OF THE PRESENT INVENTION WITH COMMERCIALLY AVAILABLE LOCKWASHERS OF THE PRIOR ART.

To compare the locking performance of the serrated spring lockwasher of the present invention with the locking performance of commercially available spring lockwashers of the prior art all the lockwashers were tested for the seated locking ability and the transverse-vibration-resistance test.

The prior art spring lockwashers used for the comparative tests are as follows:

1.3/8" Plain finish spring lockwashers (inner and outer ribs).

2.5/8" Zinc yellow chromate finish spring lockwashers (inner and outer ribs).

3.5/8" plain finish.serrated, spring lockwashers.

The lockwashers were tested for seated locking ability on mating surfaces of hardness $R_B$ 80-90. The 3/8" lockwashers were seated on this mating surfaces under 3/8-16 X 2-$\frac{1}{2}$ " hexagonal bolts of grades 2, 5 and 8, the 5/8" lockwashers were seated under 5/8-11 X 3-$\frac{1}{2}$ " grades hexagonal bolts. The hexagonal bolts were torqued to the respective recommended preload using a calibrated beam type torque wrench and a compression load cell. The on-torques were recorded, and then the hexagonal bolts were loosened until the preloads fell to zero at which point the maximum off-torques were also recorded. The off-to-on torque ratios were then calculated from this data.

## TRANSVERSE-VIBRATION TEST

The 3/8" spring lockwashers were tested for transverse vibration-resistance on mating surfaces of hardness $R_B$ 80-90, 3/8"-16 X 2-$\frac{1}{2}$ "; hexagonal bolts of grades, 2, 5 and 8 were used in this test.

The initial preload and load remaining after 25, 50 and 100 seconds of transverse vibration were recorded. The percent of retained preload was then calculated from this data.

## RESULTS

The results from the seated locking ability test are tabulated in Table 1. The vibration-resistance results are listed in Table II.

| SPECIMEN | BOLT | PRELOAD lbs | ON-TORQUE in.-lbs | OFF-TORQUE in.-lbs | TORQUE RATIO |
|---|---|---|---|---|---|
| **A. 3/8" Plain Finish Spring Lockwashers*** | | | | | |
| 1 | Grade 8 | 6,900 | 450 | 325 | 0.72 |
| 2 | | 6,900 | 375 | 250 | 0.67 |
| 3 | Grade 5 | 4,900 | 550 | 425 | 0.77 |
| 4 | | 4,900 | 425 | 350 | 0.82 |
| 5 | | 4,900 | 375 | 300 | 0.80 |
| 6 | Grade 2 | 3,200 | 275 | 200 | 0.73 |
| **B. 5/8" Zinc Finish, zinc yellow chromate and the invention (serrated) Helical Spring Lockwashers**** | | | | | |
| 1 | Zinc Finish | 13,800 | 2,250 | 1,800 | 0.80 |
| 2 | | 14,100 | 1,900 | 1,400 | 0.74 |
| 3 | | 14,400 | 2,250 | 1,700 | 0.76 |
| 4 | Zinc yellow chromate | 14,300 | 1,800 | 1,400 | 0.78 |
| 5 | | 14,100 | 1,500 | 1,100 | 0.73 |
| 6 | | 14,200 | 1,700 | 1,250 | 0.74 |

EP 0 353 620 A1

| SPECIMEN | BOLT | PRELOAD lbs | ON-TORQUE in.-lbs | OFF-TORQUE in.-lbs | TORQUE RATIO |
|---|---|---|---|---|---|
| 7 | Invention (serrated) | 14,300 | 1,800 | 2,000 | 1.11 |
| 8 | | 14,200 | 2,000 | 2,100 | 1.05 |
| 9 | | 14,200 | 2,200 | 2,200 | 1.00 |

\* All items were tested on $R_B$ 80-90 coupons.

\*\* All items were tested on $R_B$ 80-90 coupons with 5/8" grade 5 hex bolts.

EP 0 353 620 A1

## TABLE II

| TRANSVERSE VIBRATION-RESISTANCE RESULTS OF 3/8" PLAIN FINISH SPRING LOCKWASHERS | | | | | | | | |
|---|---|---|---|---|---|---|---|---|
| SPECIMEN | BOLT | PRELOAD, lbs. | FINAL LOAD, lbs | | | % RETAINED PRELOAD | | |
| | | | AFTER 25 SECONDS | AFTER 50 SECONDS | AFTER 100 SECONDS | AFTER 25 SECONDS | AFTER 50 SECONDS | AFTER 100 SECONDS |
| 1 | Grade 8 | 6,900 | 1,725 | 1,200 | 1,200 | 25 | 17 | 17 |
| 2 | Grade 5 | 4,950 | 1,880 | 1,350 | 1,250 | 38 | 27 | 25 |
| 3 | | 4,900 | 1,860 | 1,700 | 1,400 | 38 | 35 | 29 |
| 4 | | 4,950 | 950 | 950 | 850 | 19 | 19 | 17 |
| 5 | | 4,950 | 900 | 800 | 750 | 18 | 16 | 15 |
| 6 | Grade 2 | 3,200 | 1,600 | 1,425 | 1,000 | 50 | 45 | 31 |
| 7 | | 3,150 | 1,200 | 1,050 | 225 | 38 | 33 | 7 |
| 8 | | 3,200 | 1,1800 | 1,100 | 700 | 37 | 34 | 22 |
| All items were tested on $R_B$ 80-90 coupons. | | | | | | | | |

## DISCUSSION OF RESULTS

From the results, it can be seen that the torque ratios developed by the serrated helical spring lockwashers of the present invention were much better than the inner-outer ribs, plain finish and zinc yellow chromate finish, and the plain finish serrated spring lockwasher's torque ratios. Althought the 5/8" lockwashers were never tested for vibration-resistance, previous testing in this area has shown that washers with torque ratios above 0.85 will provide satisfactory holding power in vibration-resistance. Thus, commercially available spring lockwashers maximum torque ratio of 0.82 indicates that little vibration-resistance would be expected, while the serrated spring helical lock washers of the present invention minimum torque ratio of 1.0 indicated adequate vibration resistance.

The vibration-resistance of the 3/8" plain finish spring lockwashers was extremely low, which verifies the above conclusions, since the torque ratios developed by these lockwashers were below 0.85. The design prevented the serrations from fully contacting the mating surface and bolt head. The ribs in this design did prenetrate the two surfaces but not deeply enough to insure serration contact.

The plain finish serrated spring lockwashers design contained finer serrations than the lockwasher of the present invention. This resulted in little penetration of the mating surface and bolt head, thus low torque ratios were developed by this prior art lockwashers.

All of the tested lockwashers did considerable damage to the mating surfaces when loosened. This was due to the split's sharp ends biting into the joint and head bearing surfaces. The damage done by the lockwashers of the present invention was not to high to limit reusing the mating surfaces.

In other tests to evaluate the locking performance of the serrated helical spring washers of the present invention, there was used a so called Transverse Vibration Test Machine. This unit created dynamic forces on a simulated joint in such a fashion that a nonlocking fastener will loosen quickly. Instrumentation provides a record of fastener preload as a function of the number of vibration cycles. Thus, the preload loss characteristics of varios locking and nonlocking fasteners can be measured.

The sizes of the helical spring lockwashers of the present invention included in this evaluation are 5/16", 1/2" and 3/4" diameters. All washers were manufactured by the intended production method and through-hardened to $R_C$ 45-53. A portion of the washers were zinc plated per SPS code P6A.

The washers were tested on SAE grade 5 and grade 8 hexagonal head cap screws with a minimum of one diameter thread engagement in a class 2B threaded steel bushing. The 5/16-18 screws were 1.25" long, the 1/2-13 screws were 2" long and the 3/4 -10 screws were 3" long. Standard helical spring lockwashers were purchased and tested for comparison.

## TRANSVERSE VIBRATION RESISTANCE TEST

The washers were tested on the above described Transverse Vibration Test unit. Screws, with the appropriate washer, were seated to their recommended preload against the indicated mating test bushing. This mating surface bushing and the threaded bushing were fixed against rotation. The screw preload was recorded using the machine's calibrated load cell.

A test amplitude, as indicated, was set on the spindle eccentric of the testing unit. This was the amplitude which occurred under no-load conditions. The standard test speed of 750 cycles per minute was used. When the drive motor was energized, a dynamic transverse force was applied to the test joint. The fastener preload was recorded as a function of time (or cycles) on a Hewlett Packard X-Y Recorder. Preload was then tabulated at the cycles indicated.

Transverse vibration tests were also conducted with the lockwasher placed under a grade B or grade C hexagonal nut using a setup that is the reverse of that used to test the washer under a screw.

## RESULTS

Tables III and IV present the distribution of tested specimens by size and finish. Vibration test results for 5/16" size washers in combination with screws are contained in Tables V through VIII. Similar data for 1/2" size washers is presented in Tables IX through XII. Data for 3/4" size washers is presented in Table XIII.

Vibration test results for 5/16" and 1/2" size washers tested with nuts are presented in Table XIV through XVII.

## DISCUSSION OF RESULTS.

The transverse vibration test procedure is an accelerated test which can provide a relative measure of the preload-loss characteristics of fasteners. The level of transverse force selected for these tests will typically loosen a free-spinning screw in 10-15 seconds. The fact that a fastener loosens in these tests does not imply that it will loosen in a given application. The usefulness of this test method is in its ability to discriminate between levels of performance.

In these tests, the performance of standard helical split lockwashers was very erratic. Some specimens showed comparable levels of retained preload, but the majority, roughly 80 percent, showed significantly lower retained preload than the present invention washers.

While not illustrated in this tests, gouging and scoring of the joint material was more severe with the standard helical split lockwashers than with the present invention serrated helical lockwashers.

7

EP 0 353 620 A1

TABLE III

| DISTRIBUTION OF THE INVENTION HELICAL LOCKWASHERS TESTED. WASHER POSITIONED UNDER HEX HEAD SCREW | | | | | | |
|---|---|---|---|---|---|---|
| WASHER SIZE,in. | WASHER Finish[1] | TEST Screw | MATING TEST BUSHING | | | |
| | | | STEEL, RB 90 | STEEL, RB 99 | STEEL, RC 25 | CAST IRON |
| 5/16 | A | Grade 5 | 5 | 5 | 5 | - |
| | | Grade 8 | 5 | 5 | 5 | - |
| | Z | Grade 5 | 5 | - | 5 | - |
| | | Grade 8 | 5 | - | 5 | - |
| 1/2 | A | Grade 5 | 5 | - | 5 | - |
| | | Grade 8 | 5 | - | 5 | 5 |
| | Z | Grade 5 | 5 | - | 5 | - |
| | | Grade 8 | 5 | - | 5 | - |
| 3/4 | A | Grade 5 | 5 | - | 5 | - |
| Note: | | | | | | |

1. A- Plain finish
Z- Zinc plated

TABLE IV

| DISTRIBUTION OF THE INVENTION HELICAL LOCKWASHERS TESTED.WASHER POSITIONED UNDER HEX NUT. | | | | |
|---|---|---|---|---|
| WASHER SIZE, in. | WASHER FINISH | TEST NUT | MATING TEST BUSHING | |
| | | | STEEL, RB 90 | STEEL, RC 25 |
| 5/16 | Plain | Grade B | 5 | 5 |
| | | Grade C | 5 | 5 |
| 1/2 | Plain | Grade B | 5 | 5 |
| | | Grade C | 5 | 5 |

8

TABLE V

| TRANSVERSE VIBRATION TEST RESULTS FOR PLAIN FINISH HELICAL AND THE INVENTION WASHERS TESTED ON 5/16-18 X I I/4 GRADE 5 HEX HEAD SCREWS. | | | |
|---|---|---|---|
| AMPLITUDE: ± 0.31" INDUCED LOAD: 3,115 lb. FREQUENCY 750 cpm | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1 | 24.1 | 48.2 |
| | 2 | 57.8 | 48.2 |
| | 3 | 33.7 | 51.4 |
| | 4 | 53.0 | 43.3 |
| | 5 | 32.1 | 41.7 |
| Steel, $R_B$ 99 | 1 | 32.1 | 44.9 |
| | 2 | 32.1 | 49.8 |
| | 3 | 32.1 | 44.9 |
| | 4 | 25.7 | 49.8 |
| | 5 | 28.9 | 44.9 |
| Steel, $R_B$ 90 | 1 | 16.1 | 43.3 |
| | 2 | 28.8 | 36.9 |
| | 3 | 22.5 | 40.1 |
| | 4 | 6.4 | 48.1 |
| | 5 | 22.5 | 40.1 |

## TABLE VI

| TRANSVERSE VIBRATION TEST RESULTS FOR PLAIN FINISH HELICAL AND THE INVENTION WASHERS TESTED ON 5/16-18 X 1 1/4 GRADE 8 HEX HEAD SCREWS. | | | |
|---|---|---|---|
| AMPLITUDE: ± .031" <br> INDUCED LOAD: 4,410 lb <br> FREQUENCY: 750 cmp | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1 | 0 | 51.0 |
| | 2 | 19.3 | 49.9 |
| | 3 | 0 | 51.0 |
| | 4 | 38.5 | 45.4 |
| | 5 | 0 | 43.1 |
| Steel, $R_B$ 99 | 1 | 0 | 45.3 |
| | 2 | 47.6 | 48.8 |
| | 3 | 47.6 | 47.6 |
| | 4 | 13.6 | 54.4 |
| | 5 | 0 | 52.1 |
| Steel, $R_B$ 90 | 1 | 40.8 | 51.0 |
| | 2 | 11.3 | 53.3 |
| | 3 | 26.1 | 37.4 |
| | 4 | 0 | 51.0 |
| | 5 | 61.2 | 49.9 |

TABLE VII

| TRANSVERSE VIBRATION TEST RESULTS FOR ZINC PLATED WASHERS OF THE INVENTION TESTED ON 5/16-18 X 1 1/4 GRADE 5 HEX HEAD SCREWS | | |
|---|---|---|
| AMPLITUDE: ± .031"<br>INDUCED LOAD: 3,115 lb<br>Frequency: 750 cpm | | |
| JOINT MATERIAL | SPECIMEN | % PRELOAD REMAINING AFTER 100 SEC. |
| Steel, $R_C$ 25 | 1 | 51.3 |
| | 2 | 32.1 |
| | 3 | 54.5 |
| | 4 | 57.7 |
| | 5 | 38.5 |
| Steel, $R_B$ 90 | 1 | 54.5 |
| | 2 | 40.1 |
| | 3 | 48.1 |
| | 4 | 50.5 |
| | 5 | 40.1 |

TABLE VIII

| TRANSVERSE VIBRATION TEST RESULTS FOR ZINC PLATED WASHERS OF THE INVENTION TESTED ON 5/16-18 X 1 1/4 GRADE 8 HEX HEAD SCREWS | | |
|---|---|---|
| AMPLITUDE: ± .031<br>INDUCED LOAD: 4,410 lb<br>FREQUENCY: 750 cpm | | |
| JOINT MATERIAL | SPECIMEN | % PRELOAD REMAINING AFTER 100 SEC. |
| Steel, $R_C$ 25 | 1 | 63.4 |
| | 2 | 29.4 |
| | 3 | 57.8 |
| | 4 | 52.1 |
| | 5 | 52.1 |
| Steel, $R_B$ 90 | 1 | 57.8 |
| | 2 | 60.0 |
| | 3 | 9.0 |
| | 4 | 57.8 |
| | 5 | 61.2 |

TABLE IX

| TRANSVERSE VIBRATION TEST RESULTS FOR PLAIN FINISH HELICAL AND THE INVENTION WASHERS TESTED ON 1/2-13 X 2 GRADE 5 HEX HEAD SCREWS | | | |
|---|---|---|---|
| AMPLITUDE: ± .050" INDUCED LOAD: 8,470 lb FREQUENCY: 750 cpm | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1 | 13.0 | 42.5 |
| | 2 | 0 | 49.6 |
| | 3 | 16.5 | 47.2 |
| | 4 | 9.4 | 44.9 |
| | 5 | 9.4 | 50.8 |
| Steel, $R_B$ 90 | 1 | 23.6 | 53.1 |
| | 2 | 13.0 | 51.9 |
| | 3 | 11.8 | 54.3 |
| | 4 | 11.8 | 47.2 |
| | 5 | 4.7 | 51.9 |

TABLE X

| TRANSVERSE VIBRATION TEST RESULTS FOR PLAIN FINISH HELICAL WASHER AND THE INVENTION WASHERS ON 1/2-13 X 2 GRADE 8 HEX HEAD SCREWS | | | |
|---|---|---|---|
| AMPLITUDE: ± 0.50"  INDUCED LOAD: 11,900 lb  FREQUENCY: 750 cpm | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1 | 0 | 64.7 |
| | 2 | 5.0 | 0 |
| | 3 | 5.0 | 68.9 |
| | 4 | 0 | 69.7 |
| | 5 | 0 | 73.9 |
| Steel, $R_B$ 90 | 1 | 2.5 | 67.2 |
| | 2 | 0 | 72.3 |
| | 3 | 8.3 | 70.6 |
| | 4 | 0 | 72.3 |
| | 5 | 12.4 | 73.9 |
| Cast Iron | 1 | - | 67.2 |
| | 2 | - | 74.7 |
| | 3 | - | 79.8 |
| | 4 | - | 77.3 |
| | 5 | - | 84.0 |

TABLE XI

| TRANSVERSE VIBRATION TEST RESULTS FOR ZINC PLATED WASHERS AND THE INVENTION WASHERS TESTED ON 1/2-13 X 2 GRADE 5 HEX HEAD SCREWS | | |
|---|---|---|
| AMPLITUDE: ± .050"  INDUCED LOAD: 8,470 lb  FREQUENCY: 750 cpm | | |
| JOINT MATERIAL | SPECIMEN | % PRELOAD REMAINING AFTER 100 SEC. |
| Steel, $R_C$ 25 | 1 | 42.5 |
| | 2 | 42.5 |
| | 3 | 41.3 |
| | 4 | 55.4 |
| | 5 | 38.9 |
| Steel, $R_B$ 90 | 1 | 53.1 |
| | 2 | 44.8 |
| | 3 | 47.2 |
| | 4 | 49.5 |
| | 5 | 53.1 |

TABLE XII

| TRANSVERSE VIBRATION TEST RESULTS FOR ZINC PLATED WASHERS AND THE INVENTION WASHERS TESTED ON 1/2-13 X 2 GRADE 8 HEX HEAD SCREWS | | |
|---|---|---|
| AMPLITUDE: ± .050"  INDUCED LOAD: 11,900 lb  FREQUENCY: 750 cpm | | |
| JOINT MATERIAL | SPECIMEN | % PRELOAD REMAINING AFTER 100 SEC. |
| Steel, $R_C$ 25 | 1 | 1.6 |
| | 2 | 81.5 |
| | 3 | 76.4 |
| | 4 | 0.8 |
| | 5 | 69.7 |
| Steel, $R_B$ 90 | 1 | 69.7 |
| | 2 | 65.5 |
| | 3 | 69.7 |
| | 4 | 63.0 |
| | 5 | 63.8 |

TABLE XIII

| TRANSVERSE VIBRATION TEST RESULTS FOR PLAIN FINISH HELICAL AND THE INVENTION WASHERS TESTED ON 3/4-10 PLAIN FINISH GRADE 5 HEX HEAD SCREWS | | | |
|---|---|---|---|
| AMPLITUDE: ± .075"  INDUCED LOAD: 19,880 lb  FREQUENCY: 750 cpm | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1 | 25.1 | 69.1 |
| | 2 | 0 | 64.1 |
| | 3 | 41.4 | 82.9 |
| | 4 | 80.4 | 79.2 |
| | 5 | 2.0 | 72.9 |
| Steel, $R_B$ 90 | 1 | 15.0 | 77.9 |
| | 2 | 0 | 72.9 |
| | 3 | 3.7 | 69.1 |
| | 4 | 75.4 | 72.9 |
| | 5 | 0 | .77.9 |

TABLE XIV

| TRANSVERSE VIBRATION TEST RESULTS FOR PLAIN FINISH HELICAL AND THE INVENTION WASHERS TESTED UNDER 5/16-18 PLAIN FINISH GRADE B HEX NUTS. | | | |
|---|---|---|---|
| AMPLITUDE: ± .031"<br>INDUCED LOAD: 3,115 lb<br>FREQUENCY: 750 cpm | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1<br>2<br>3<br>4<br>5 | 14.4<br>35.3<br>14.4<br>1.6<br>17.6 | 22.4<br>44.9<br>3.2<br>4.8<br>54.5 |
| Steel, $R_B$ 90 | 1<br>2<br>3<br>4<br>5 | 9.6<br>11.2<br>11.2<br>12.8<br>70.6 | 62.6<br>44.9<br>56.1<br>54.5<br>59.3 |

TABLE XV

| TRANSVERSE VIBRATION TEST RESULTS FOR PLAIN FINISH HELICAL AND THE INVENTION WASHERS TESTED UNDER 5/16-18 PLAIN FINISH GRADE C HEX NUTS | | | |
|---|---|---|---|
| AMPLITUDE: ± .031"  INDUCED LOAD: 4,410 lb  FREQUENCY: 750 cpm | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1 | 24.9 | 15.8 |
| | 2 | 69.1 | 81.6 |
| | 3 | 74.8 | 81.6 |
| | 4 | 0 | 6.8 |
| | 5 | 24.9 | 4.5 |
| Steel, $R_B$ 90 | 1 | 39.6 | 77.0 |
| | 2 | 13.6 | 74.8 |
| | 3 | 64.6 | 73.6 |
| | 4 | 43.0 | 83.9 |
| | 5 | 40.8 | 78.2 |

17

TABLE XVI

| TRANSVERSE VIBRATION TEST RESULTS FOR PLAIN FINISH HELICAL AND THE INVENTION WASHERS TESTED UNDER 1/2-13 PLAIN FINISH GRADE B HEX NUTS | | | |
|---|---|---|---|
| AMPLITUDE: ± .050"<br>INDUCED LOAD: 8,470 lb<br>FREQUENCY: 750 cpm | | | |
| JOINT MATERIAL | SPECIMEN | % PRELOAD REMAINING AFTER 100 SEC. | |
| | | HELICAL WASHER | THE INVENTION WASHER |
| Steel, $R_C$ 25 | 1 | 77.9 | 87.3 |
| | 2 | 44.8 | 81.4 |
| | 3 | 16.5 | 80.2 |
| | 4 | 25.9 | 87.3 |
| | 5 | 25.9 | 80.2 |
| Steel, $R_B$ 90 | 1 | 36.5 | 72.0 |
| | 2 | 23.6 | 77.9 |
| | 3 | 24.7 | 66.1 |
| | 4 | 27.1 | 63.7 |
| | 5 | 23.6 | 64.9 |

TABLE XVII

| TRANSVERSE VIBRATION TEST RESULTS FOR PLAIN FINISH HELICAL AND THE INVENTION WASHERS TESTED UNDER 1/2-13 PLAIN FINISH GRADE C HEX NUTS | | | |
|---|---|---|---|
| AMPLITUDE: ± .050" INDUCED LOAD: 11,900 lb FREQUENCY: 750 cpm | | | |
| JOINT MATERIAL | SPECIMEN | % PRELOAD REMAINING AFTER 100 SEC | |
| | | HELICAL WASHER | THE INVENTION WASHER |
| Steel, $R_C$ 25 | 1 | 41.1 | 84.8 |
| | 2 | 68.0 | 89.0 |
| | 3 | 89.9 | 89.0 |
| | 4 | 64.7 | 84.0 |
| | 5 | 20.1 | 91.5 |
| Steel, $R_B$ 90 | 1 | 30.5 | 89.0 |
| | 2 | 31.9 | 85.7 |
| | 3 | 30.5 | 89.0 |
| | 4 | 29.4 | 89.0 |
| | 5 | 40.3 | 90.7 |

Although in the above certain specific embodiment of the present invention has been shown and described, it is to be understood that many modifications thereof are possible. The present invention, therefor, is not to be restricted except in so faras it is necessitated by the prior art and the spirit of the appended claims.

**Claims**

1.- A serrated helical spring lockwasher, consisting in a split body having two opposite bearing surfaces provided with serrations along the full lenghth of each one, characterized by the fact that said bearing surfaces have a taper permitting the washer to seat only on the inner diameter thereof, the teeth of the serrations being left teeth, having a radial or slant direction, and being located along the full width of said bearing surfaces.

2.- A serrated helical spring lockwasher, according to claim 1, further characterized in that the taper of the bearing surfaces is more pronunciated in the inner and outer edges of the serrated helical spring lockwasher body.

FIG.1

EP 0 353 620 A1

FIG.2

FIG.3

EP 0 353 620 A1

## DOCUMENTS CONSIDERED TO BE RELEVANT

EP 89113805.9

| Category | Citation of document with indication, where appropriate, of relevant passages | Relevant to claim | CLASSIFICATION OF THE APPLICATION (Int. Cl.X) 5 |
|---|---|---|---|
| A | DE - A1 - 3 020 406 (HEDTMANN) * Claims 1,2,3,4; fig. 3,4, 6 * | 1,2 | F 16 B 43/00 F 16 B 39/24 |
| A | DE - A - 2 413 760 (CAM-LOCK FASTENERS, INC.) * Claims 1,2; fig. 2 * | 1 | |
| A | CH - A5 - 608 576 (SCHNORR KG) * Claims; fig. 3,4,5 * | 1 | |

TECHNICAL FIELDS SEARCHED (Int. Cl.X) 5

F 16 B 39/00
F 16 B 43/00

The present search report has been drawn up for all claims

| Place of search | Date of completion of the search | Examiner |
|---|---|---|
| VIENNA | 28-09-1989 | RIEMANN |